# EUROPÄISCHE PATENTSCHRIFT

(11) **EP 3 115 859 B1**
(45) Veröffentlichungstag und Bekanntmachung des Hinweises auf die Patenterteilung: **25.08.2021**
(21) Anmeldenummer: 15175811.7
(22) Anmeldetag: 08.07.2015
(51) Int. Cl.: G05B 19/418, G06F 9/44

(54) **VERFAHREN UND KONFIGURATIONSSYSTEM ZUM KONFIGURIEREN VON HARDWARE-BAUGRUPPEN IN EINEM AUTOMATISIERUNGSSYSTEM**
METHOD AND CONFIGURATION SYSTEM FOR CONFIGURING HARDWARE ASSEMBLIES IN AN AUTOMATION SYSTEM
PROCÉDÉ ET SYSTÈME DE CONFIGURATION POUR LA CONFIGURATION DE SOUS-ENSEMBLES MATÉRIELS DANS UN SYSTÈME D'AUTOMATISATION

(43) Veröffentlichungstag der Anmeldung: 11.01.2017
(73) Patentinhaber: Siemens Aktiengesellschaft, 80333 München (DE)
(72) Erfinder: Mössner, Rudolf, 93133 Burglengenfeld (DE)

(56) Entgegenhaltungen:
- WO-A1-00/70417
- FISHER N ET AL: "Thermal-Aware Global Real-Time Scheduling on Multicore Systems", REAL-TIME AND EMBEDDED TECHNOLOGY AND APPLICATIONS SYMPOSIUM, 2009. RTAS 2009. 15TH IEEE, IEEE, PISCATAWAY, NJ, USA, 13. April 2009 (2009-04-13), Seiten 131-140, XP031450851, ISBN: 978-0-7695-3636-1
- None

## Beschreibung

Die Erfindung betrifft ein Verfahren zum Konfigurieren von Hardware-Baugruppen in einem Automatisierungssystem mit den Schritten:
a) Öffnen oder Anlegen eines Projektes in einer Projektiersoftware,
b) Öffnen oder Erzeugen, in diesem Projekt, einer Station mit einer Anzahl von Steckplätzen, wobei die für die Station vorhandenen Steckplätze angezeigt werden,
c) Öffnen eines Hardware-Katalogs, der eine Vielzahl von Hardware-Baugruppen-Stammdaten-Sätze umfasst,
d) Einfügen zumindest eines Hardware-Baugruppen-Stammdaten-Satzes einer Hardware-Baugruppe aus dem Hardware-Katalog in die Station, wobei zumindest auf einem ersten Steckplatz eine erste Hardware-Baugruppe eingefügt wird.

Des Weiteren betrifft die Erfindung ein Konfigurationssystem zum Konfigurieren von Hardware-Baugruppen in einem Automatisierungssystem mit einer Projektiersoftware ausgestaltet mit einem Anlegemittel zum Anlegen eines Projektes, einem Erzeugungsmittel zum Erzeugen einer Station mit einer Anzahl von Steckplätzen, einem Hardware-Katalog, der eine Vielzahl von Hardware-Baugruppen-Stammdaten-Sätzen umfasst, einem Einfügemittel zum Einfügen zumindest eines Hardware-Baugruppen-Stammdaten-Satzes einer Hardware-Baugruppe aus dem Hardware-Katalog in die Station.

Automatisierungssysteme weisen eine oder mehrere miteinander verbundene Stationen auf. Jede dieser Stationen ist vorzugsweise modular aufgebaut und kann aus verschiedenen Hardware-Baugruppen zusammengesetzt sein. Diese Hardware-Baugruppen bilden im Allgemeinen die kleinste Einheit des Automatisierungssystems und sind für einen Anlageninbetriebsetzer in einem Hardware-Katalog zusammengefasst. In diesem Katalog ist jeder Hardware-Baugruppe, beispielsweise eine Bestellnummer zugeordnet. Das Projektieren und Konfigurieren von Hardware-Baugruppen in dem Automatisierungssystem kann beispielsweise mittels einer Projektierungssoftware, wie z.B. Step 7 von Siemens, erfolgen. Das bedeutet, nach dem Aufruf der Projektiersoftware öffnet sich eine entsprechende Benutzeroberfläche. Für die zu automatisierende Anlage, Maschine bzw. für jede Station wird dann ein Projekt erzeugt. In diesem Projekt werden dann die Hardware-Baugruppen konfiguriert, d.h. den zu parametrierenden Hardware-Baugruppen wird ein Steckplatz in der Station zugeordnet. Nach erfolgreicher Konfiguration und Parametrierung wird diese Konfiguration gespeichert und in das Automatisierungssystem geladen. Die entsprechende Vorgehensweise ist beispielsweise aus der "Einführung in den SIMATIC-Manager" von Walter, 14.05.2003, dem Europäischen Patentamt unter der Nummer XP002408965, bekannt.

Auch sind Automatisierungssystem, Hardwarebaugruppen und CPU's im Mehrprozessorbetrieb aus dem Handbuch "SIMATIC, Hardware konfigurieren und Verbindungen projektieren mit STEP 7, Diese Dokumentation ist Bestandteil des Dokumentationspaketes mit der Bestellnummer: 6ES7810-4CA10-8AW0, 05/2010, A5E02789739-01, Seiten 1 - 496, bekannt.

Auch offenbart die EP 1 480 092 B1 ein Verfahren zur Projektierung eines Automatisierungssystems.

Für Hardware-Baugruppen im Bereich der Automatisierungstechnik gelten spezielle Anforderungen an die dort eingesetzte Technik. Die Hardware-Baugruppen werden üblicherweise direkt in einem Fertigungsumfeld, beispielsweise in Schaltschränken bzw. direkt an einer Maschine verbaut.

In der WO 00/70417 A1 wird ein Konfigurationssystem für Kontrollsysteme in der industriellen Steuerungstechnik beschrieben, wobei auch maximale Umgebungstemperaturen konfiguriert werden können.

Aufgrund des Einsatzortes der Hardware-Baugruppen bestehen z.B. spezielle Anforderungen bezüglich einer elektromagnetischen Verträglichkeit, Schock, Vibrationen, wie sie u.a. auch in der IEC 61131-2 beschrieben werden. Des Weiteren hat sich als ein Qualitätsstandard etabliert, dass Automatisierungskomponenten bzw. die Hardware-Baugruppen bei hohen Umgebungstemperaturen bis zu 60° C oder sogar 65° C eingesetzt werden können. Aufgrund des rauen industriellen Umfelds wird bei einer Entwärmung der Hardware-Baugruppen im Regelfall auf eine freie Konvektionskühlung zurückgegriffen, da im Gerät verbaute Lüfter auf der einen Seite zur Verschmutzung neigen und auf der anderen Seite eine MTBF der Geräte erheblich reduzieren. Neben den hohen Umgebungstemperaturen und der Anforderung nach passiver Kühlung, erschweren auch die Anforderungen an Schock und Vibration das Design der Kühlung von leistungsfähigen elektronischen Komponenten im industriellen Umfeld erheblich.

In den Hardware-Baugruppen verbaute elektrische und elektronische Komponenten, wie beispielsweise ein Mehr-Kernprozessorsystem, sind häufig nur bis zu Umgebungstemperaturen von 85° C bzw. Gehäusetemperaturen von unter 100° C spezifiziert. Demnach stehen also aufgrund der im industriellen Umfeld zugelassenen hohen Umgebungstemperaturen nur geringe Temperaturdifferenzen zu den spezifizierten Maximaltemperaturen der verwendeten Bauelemente zur Verfügung. Dadurch wird auch eine maximal zulässige Verlustleistung des Systems stark limitiert. Eine Begrenzung der maximal zulässigen Verlustleistung begrenzt unmittelbar eine verfügbare Rechenleistung des jeweils genutzten Prozessorsystems bzw. der ganzen Hardware-Baugruppe.

Aus der Personal-Computer Produktwelt ist es bekannt, die Rechenleistung eines Systems dynamisch an die gerade vorherrschenden Bedingungen anzupassen. Diese beispielsweise als Turbo Modes auf der einen Seite bzw. als Throttling auf der anderen Seite bezeichneten Verfahren werden z.B. bei Laptops und anderen mobilen Geräten eingesetzt.

Bei diesem bekannten Verfahren ist es jedoch von Nachteil, dass diese Verfahren zu erheblichen Schwankungen in der zur Verfügung stehenden Rechenleistung in Abhängigkeit der gerade vorherrschenden Bedingungen führen. Für Hardware-Baugruppen in der Automatisierungstechnik sind derartige Verfahren in der Regel nicht geeignet, da für die in den Hardware-Baugruppen ablaufenden Applikationen eine konstante Rechenleistung und damit eine stabile Zykluszeit bzw. konstante Reaktionszeiten für den Fertigungsprozess von zentraler Bedeutung sind.

Hardware-Baugruppen für die Automatisierungstechnik werden derzeit im Regelfall bezüglich eines Prozessortaktes, Anzahl der verwendeten Prozessorkerne und der verwendeten Speicher so ausgelegt, dass sie bei maximalen garantierten Umgebungsbedingungen sicher entwärmbar sind. Bei geringeren Umgebungstemperaturen, und damit höherer zulässiger Verlustleistung könnten die Hardware-Baugruppen wesentlich performanter betrieben werden.

Eine dynamische Anpassung der Rechenleistung anhand der gerade vorherrschenden Umgebungsbedingungen wird bei Industriebaugruppen nicht durchgeführt. Hierdurch soll vermieden werden, dass die Rechenleistung der Hardware-Baugruppe, und damit auch der zu automatisierende Fertigungsprozess, von den Umgebungsbedingungen nicht beeinflusst werden und dadurch Probleme im Produktionsprozess vermieden werden.

Eine maximal erreichbare Rechenleistung der Hardware-Baugruppe bzw. einer eingesetzten Automatisierungskomponente wird also im Wesentlichen durch die maximale garantierte Umgebungstemperatur beeinflusst. Bereits eine geringfügige Reduzierung der maximalen Umgebungstemperatur für einen bestimmten Einsatzfall ermöglicht eine deutliche Steigerung der Rechenleistung der Hardware-Baugruppe.

Damit ist es die Aufgabe der vorliegenden Erfindung, die Rechenleistung von Hardware-Baugruppen in der Automatisierungstechnik zu steigern, ohne eine Reproduzierbarkeit bei einer Programmausführung bei dynamischen Änderungen der Umgebungsbedingungen (Temperatur) negativ zu beeinflussen. Diese Aufgabe soll allerdings ohne eine Steigerung der Herstellkosten von Hardware-Baugruppen, welche durch zusätzliche komplexe Entwärmungsmaßnahmen realisiert werden, gelöst werden.

Bei dem eingangs genannten Verfahren wird die Aufgabe dadurch gelöst, dass zusätzlich zu den erwähnten Projektierungsschritten ein Anpassungsschritt für den zumindest einen Hardware-Baugruppen-Stammdaten-Satz durchgeführt wird, wobei zumindest ein Umgebungstemperatur-Parameter, welcher die Umgebungsbedingungen am Einsatzort der zumindest einen Hardware-Baugruppe repräsentiert, spezifiziert wird, anschließend wird in einem Speicherschritt die Station mit dem in die Station eingefügten zumindest einen Hardware-Baugruppen-Stammdaten-Satz und seinen zumindest einen veränderten Umgebungstemperatur-Parameter in die neue Konfiguration in das Automatisierungssystem und auf eine Festplatte gespeichert.

Da die Automatisierungskomponenten bzw. die Hardware-Baugruppen im Regelfall auf sehr hohe Umgebungstemperaturen und eine passive Kühlung ausgelegt sind, sind sie hinsichtlich ihrer maximalen Verlustleistung und ihres maximalen Prozessortaktes auf die maximalen Umgebungstemperaturen ausgelegt. Dies ist ein maximaler Temperaturwert von beispielsweise 60° C auf dem die Hardware-Baugruppen in einem Auslieferungszustand ausgelegt sind. Allerdings kann es auch Einsatzfälle geben, in denen die maximale Umgebungstemperatur nicht erreicht wird.

Um eine Varianz bei einem Baugruppenspektrum zu begrenzen, gibt es von den Herstellern im Regelfall keine Baugruppenvarianten mit fein abgestuften Umgebungstemperatur-Klassen. Der Erfinder hat erkannt, dass es durchaus sinnvoll ist, in einen Parametrierbereich des Automatisierungssystems bzw. der Automatisierungsstationen, Konfigurationsparameter einzuführen, die die Umgebungsbedingungen an einem Einsatzort spezifizieren. Das eingeben von zusätzlichen Konfigurationsparametern sind demnach Teil eines Konfigurations- und Projektierungsverfahren für Hardware-Baugruppen in einem Automatisierungssystem. Die Parametrierung wird üblicherweise in einer Parametrieroberfläche eines Engineeringsystems durchgeführt.

Dabei wird in dem Anpassungsschritt ein im Auslieferungszustand der Hardware-Baugruppe festgelegter maximaler Temperaturwert für einen Umgebungstemperatur-Parameter zu kleineren Temperaturwerten hin verändert. Das Verfahren, die Projektiersoftware bzw. das benutzte Engineeringsystem verfügt nun über eine Programmkomponente zur Baugruppen-Konfiguration hinsichtlich einer Umgebungstemperatur. Mit der Wahl einer kleineren maximalen Umgebungstemperatur kann beispielsweise eine Prozessortaktrate in Abhängigkeit der Umgebungstemperatur gesteigert werden. Die Ablage der Temperaturinformationen für einen speziellen Einsatzfall der Hardware-Baugruppe verbleibt in der Konfigurationsdatei des Projektes für das Automatisierungssystem. Die so durch einen Anwender maximal spezifizierte Umgebungstemperatur für eine Automatisierungskomponente bzw. für die einzelne Hardware-Baugruppe bleibt zwar in einen Default-Auslieferungszustand erhalten, kann jedoch für die jeweilige Anlagenkonfiguration angepasst werden.

Um einen Anwender eines Engineeringsystems bzw. einen Inbetriebsetzer das Projektieren der Hardware-Baugruppen für das Automatisierungssystem weiter zu erleichtern, wird auf Basis des aktuell konfigurierten Umgebungstemperaturparameters und einer hinterlegten Hardware-Baugruppen spezifischen Entwärmungstabelle bei einem Hochlauf des Automatisierungssystems bzw. bei einer Änderung der Parametrierung automatisch eine Konfiguration gewählt, welche die Anzahl der zu betreibenden Prozessorkerne bei einem Mehrkernprozessor vorgibt, wodurch die Hardware-Baugruppen für den aktuell angebenden UmgebungsTemperatur-Parameter die bestmögliche Rechenleistung aufweisen und trotzdem sicher aufgrund der Umgebungsbedingungen am Einsatzort entwärmt werden. Ein Anwender der Projektierungssoftware muss hierfür über keine Detailkenntnisse der verwendeten Hardware-Baugruppen verfügen. Der Anwender muss lediglich sicherstellen, dass die Umgebungstemperatur in die er die projektierte Hardware-Baugruppe einsetzt, den parametrierten Temperaturwert nicht übersteigt.

Eine weitere Optimierung des Verfahrens sieht vor, dass zusätzlich zu der zumindest einen Umgebungstemperatur eine Konfiguration für die Anzahl zu betreibenden Prozessorkerne bei einem Mehrkernprozessor eingestellt und gespeichert wird.

Um einen Anwender oder einen Inbetriebsetzer die Projektierung weiter zu erleichtern, kann zusätzlich zu der Projektiersoftware der Anpassungsschritt von einem Webserver oder einer Bedieneinheit direkt an der Hardware-Baugruppe durchgeführt werden.

Die eingangs genannte Aufgabe wird ebenfalls gelöst durch ein Konfigurationssystem zum Konfigurieren von Hardware-Baugruppen in einem Automatisierungssystem mit einer Projektiersoftware ausgestaltet mit einem Anlagemittel zum Anlegen eines Projektes, einem Erzeugungsmittel zum Erzeugen einer Station mit einer Anzahl von Steckplätzen, einem Hardware-Katalog, der eine Vielzahl von Hardware-Baugruppen-Stammdaten-Sätze umfasst, einem Einfügemittel zum Einfügen zumindest eines Hardware-Baugruppen-Stammdaten-Satz einer Hardware-Baugruppe aus dem Hardware-Katalog in die Station, wobei durch ein Anpassungsmittel zum Anpassen der zumindest einen Hardware-Baugruppe, wobei das Anpassungsmittel ausgestaltet ist, zumindest einen Umgebungstemperatur-Parameter anzupassen, welcher die Umgebungsbedingungen am Einsatz der zumindest einen Hardware-Baugruppe repräsentiert und einem Speichermittel zum Speichern der Station mit den in die Station eingefügten zumindest einen Hardware-Baugruppen-Stammdaten-Satz und seinem zumindest einen angepassten Umgebungstemperatur-Parameter.

Für eine benutzerfreundlicher Änderung der Umgebungstemperatur-Parameter weist das Anpassungsmittel eine Parametrieroberfläche auf, welche ausgestaltet ist, ein in einem Auslieferungszustand der Hardware-Baugruppe festgelegten maximalen Temperaturwert anzuzeigen, wobei ein Eingabemittel für einen Umgebungstemperaturparameter innerhalb der Parametrieroberfläche ausgestaltet ist, den Umgebungstemperaturparameter zu kleineren Temperaturwerten hin zu verändern, ein Überschreiten des maximalen Temperaturwertes jedoch verhindert.

Das Konfigurationssystems sieht ein Optimierungsmittel vor, welches ausgestaltet ist, auf Basis der aktuell konfigurierten Umgebungstemperaturparameter und einer am hinterlegten Hardware-Baugruppen spezifischen Entwärmungstabelle bei einem Hochlauf des Automatisierungssystem bzw. einer Änderung der Parametrierung automatisch eine Konfiguration bereitzustellen, welche die Anzahl der zu betreibenden Prozessorkerne bei einem Mehrkernprozessor vorgibt und bei welcher die Hardware-Baugruppen bei dem aktuell angegebenen Umgebungstemperaturparameter die bestmögliche Rechenleistung aufweisen und trotzdem sicher aufgrund der Umgebungsbedingungen am Einsatzort entwärmt werden.

Im Hinblick auf eine anzupassende Rechenleistung der Hardware-Baugruppen wird das Konfigurationssystem weiterhin dadurch verbessert, dass die Parametrieroberfläche ein Konfigurationsmittel aufweist, welches ausgestaltet ist, eine Konfiguration für die Anzahl der zu betreibenden Prozessorkerne bei einen Mehrkernprozessor einzustellen und zu speichern.

Die Zeichnung zeigt ein Ausführungsbeispiel der Erfindung. Es zeigt die
- FIG 1: ein Konfigurationssystem zum Konfigurieren eines Automatisierungssystems;
- FIG 2: ein Anpassungsmittel mit einer Parametrieroberfläche,
- FIG 3: ein zu der FIG 2 erweitertes Anpassungsmittel mit einer erweiterten Parametrieroberfläche und
- FIG 4: ein Konfigurationssystem wie es aus FIG 1 bekannt ist mit einer Erweiterung eines Optimierungsmittels.

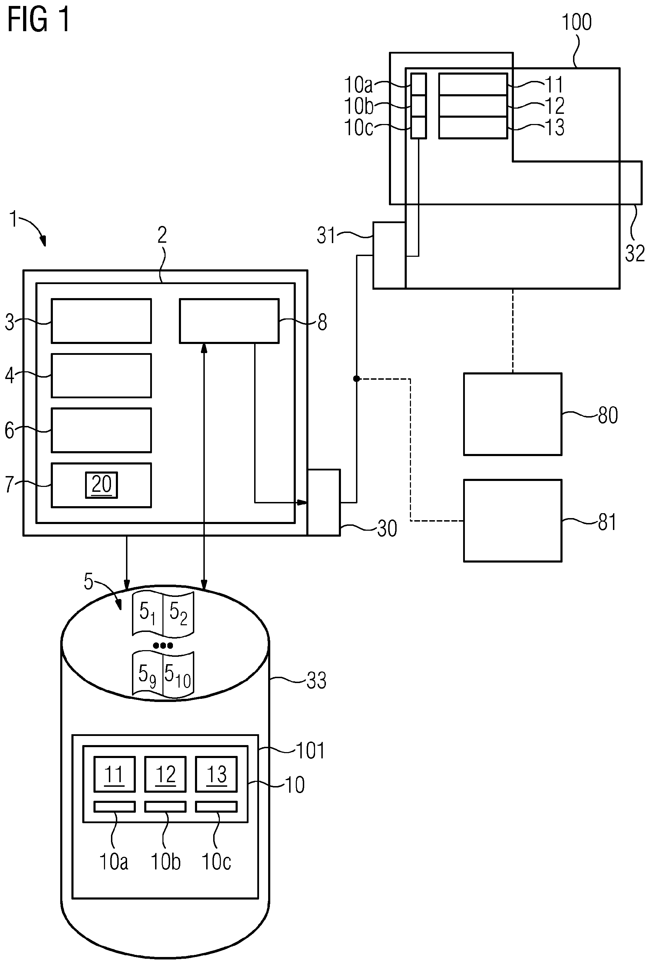

Gemäß der FIG 1 ist ein Konfigurationssystem 1 zum Konfigurieren von Hardware-Baugruppen 11, 12, 13 in einem Automatisierungssystem 100 dargestellt. Das Konfigurationssystem 1 ist beispielsweise als ein Industriecomputer ausgestaltet und weist eine Projektiersoftware 2 auf. Die Projektiersoftware 2 ist in unterschiedliche Softwarekomponenten unterteilt, so ist ein Anlegemittel 3 zum Anlegen eines Projektes 101, ein Erzeugungsmittel 4 zum Erzeugen einer Station 10 mit einer Anzahl von Steckplätzen 10a,10b,10c, ein Einfügemittel 6 zum

Einfügen eines Hardware-Baugruppen-Stammdaten-Satzes 5₁,...,5₁₀ einer Hardware-Baugruppe 11, 12, 13 aus einem Hardwarekatalog 5 in die Station 10 vorhanden.

Zur Konfiguration des Automatisierungssystems 100 muss nach dem Start der Projektiersoftware 2 ein vorhandenes Projekt 101 geöffnet oder neu erzeugt werden. In einer daraufhin erscheinenden Oberfläche kann dann entweder das schon vorhandene Projekt 101 geöffnet werden oder ein neues Projekt angelegt werden. Innerhalb des Projektes 101 ist dann eine Station 10 anzulegen oder eine bereits vorhandene Station 10 zu öffnen. Die geöffnete Station 10 wird dann in der Oberfläche in einem separaten Fenster, beispielsweise wie sie von Windows-Oberflächen bekannt ist, angezeigt. Zudem werden in dem Fenster die für die Station 10 vorhandenen Steckplätze 10a,10b,10c angezeigt. Auf den ersten Steckplatz 10a kann eine erste Hardware-Baugruppe 11, auf den zweiten Steckplatz 10b kann eine zweite Hardware-Baugruppe 12 und auf den dritten Steckplatz 10c kann eine dritte Hardware-Baugruppe 13 parametriert bzw. eingefügt werden.

Mit dem Anpassungsmittel 7 können aus dem Hardware-Katalog 5 die den Hardware-Baugruppen 11, 12, 13 zugehörigen Hardware-Baugruppen-Stammdaten-Sätzen 5₁,...,5₁₀ angepasst werden. Der ersten Hardware-Baugruppe 11 ist ein erster Hardware-Baugruppen-Stammdaten-Satz 5₁, der zweiten Hardware-Baugruppe 12 ist ein zweiter Hardware-Baugruppen-Stammdaten-Satz 5₂ und der dritten Hardware-Baugruppe 13 ist ein dritter Hardware-Baugruppen-Stammdaten-Satz 5₃ zugeordnet.

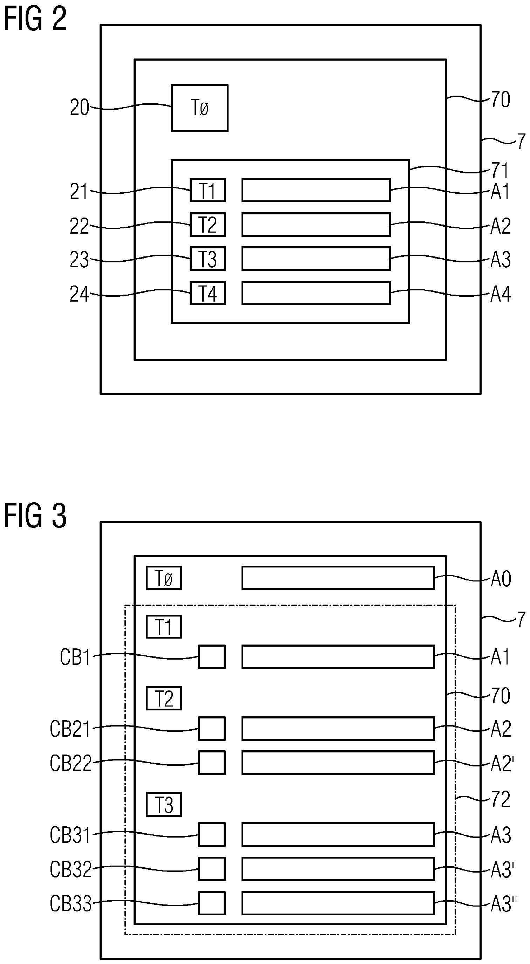

Mittels des Anpassungsmittels 7 kann in dem Anpassungsschritt ein im Auslieferungszustand der Hardware-Baugruppen 11, 12, 13 festgelegter maximaler Temperaturwert für einen Umgebungstemperatur-Parameter zu kleineren Temperaturwerten T1,T2,T3,T4 (siehe FIG 2) hin verändert werden.

Ist die Konfiguration der Hardware-Baugruppen 11, 12, 13 für das Automatisierungssystem 100 abgeschlossen, so wird das Projekt 101 mit seiner Station 10 zum einen in einem Datenspeicher 33, beispielsweise einer Festplatte, abgespeichert und zum anderen wird das Projekt 101 mit seiner Station 10 über eine Schnittstelle 30, welche über einen Feldbus mit einer Gegenschnittstelle 31 des Automatisierungssystems 100 verbunden ist, als eine Konfigurationsdatei für das Automatisierungssystem 100 in den Hardware-Baugruppen 11, 12, 13 oder in einer zentralen Komponente gespeichert.

Für eine sichere Ablage in den Datenspeicher 33 bzw. in dem Automatisierungssystem 100 sorgt ein Speichermittel 8.

In einem Auslieferungszustand der Hardware-Baugruppen 11, 12, 13 ist ein maximaler Temperaturwert für eine Umgebungstemperatur am Einsatzort der Baugruppen festgelegt, dieser ist als Defaultwert mit 65° C angegeben. Da in diesem speziellen Fall das Automatisierungssystem 100 teilweise in einem klimatisierten Schaltschrank 32 betrieben wird, wobei insbesondere die erste Hardware-Baugruppe 11, die zweite Hardware-Baugruppe 12 und die dritte Hardware-Baugruppe 13 sich in dem klimatisierten Schaltschrank 32 befinden, ist sichergestellt, dass eine maximale Umgebungstemperatur in den klimatisierten Schaltschrank 32 von 45° C nicht überschritten wird.

Mit der Kenntnis, dass das Automatisierungssystem 100, insbesondere die eingesetzten Hardware-Baugruppen 11, 12, 13 in dem klimatisierten Schaltschrank 33 eingesetzt werden, und die Umgebungstemperatur in dem klimatisierten Schaltschrank 33 45° C nicht übersteigt, kann ein Inbetriebsetzer oder Projekteur eines Automatisierungssystems 100 mit Vorteil mittels des Anpassungsmittels 7, welche eine Parametrieroberfläche 70 aufweist, einen Umgebungstemperatur-Parameter 20 anpassen.

Die FIG 2 zeigt das Anpassungsmittel 7 mit seiner Parametrieroberfläche 70. In einem Auslieferungszustand einer Hardware-Baugruppe 11, 12, 13 festgelegter Temperaturwert T0 = 65° C wird angezeigt. Mittels eines Eingabemittels 71 kann der auslieferungsseitige Temperaturwert T0 wahlweise auf einen ersten Temperaturwert 21, T1 = 60° C, einen zweiten Temperaturwert 22, T2 = 55°C, einen dritten Temperaturwert 23, T3 = 50°C oder einem vierten Temperaturwert 24, T4 = 45° C angepasst werden. Zur Information für den Inbetriebsetzer oder den Projekteur werden in dem Eingabemittel 70 neben den Anzeigen für die Temperaturwerte 21,...,24 entsprechende Ausgabefelder A1, A2, A3, A4 angezeigt. In einem ersten Ausgabefeld A1 wird in einem String angezeigt "Performancesteigerung bei T1 = 60° C entspricht 10%", in einen zweiten Ausgabefeld A2 wird in einem String angezeigt Performancesteigerung bei T2 = 55° C entspricht 15%", in einem dritten Ausgabefeld A3 wird in einem String angezeigt "Performancesteigerung bei T3 = 50° C entspricht 30%" und in einem vierten Ausgabefeld A4 wird in einem String angezeigt "Performancesteigerung bei T4 = 45° C entspricht 50%.

In dem mit FIG 1 beschriebenen Anwendungsfall würde ein Inbetriebsetzer nun mit der Kenntnis, dass in dem klimatisierten Schaltschrank 32 eine maximale Umgebungstemperatur von 45° C herrscht, in dem Eingabemittel 71 den Umgebungstemperatur-Parameter 20 von T0 = 65° C auf T4 = 45° C anpassen. Womit er in seinen Hardware-Baugruppen oder in einer speziellen Hardware-Baugruppe ein Rechenleistungsgewinn von 50% erzielt. Diese mit dem Anpassungsmittel 7 durchgeführte Änderung wird über das Speichermittel 8 in dem Projekt 101 bzw. in der Station 10 gespeichert. Das derart konfigurierte Automatisierungssystem 100 kann nun aufgrund seines besonderen Einsatzes in einem klimatisierten Schaltschrank 32 mit einer um 50% erhöhten Rechenleistung gegenüber der maximal in einem Auslieferungszustand begrenzten Rechenleistung betrieben werden. Mit der FIG 3 wird eine weitere Vereinfachung für eine Konfiguration durch den Anwender vorgestellt. Das Anpassungsmittel 7 ist mit seiner Parametrieroberfläche 70 nun derart erweitert, dass es ein Konfigurationsmittel 72 aufweist, wobei neben den Anzeigen für unterschiedliche Temperaturstufen T1,T2,T3 und den Ausgabefeldern nun weitere Optionen zur Konfiguration mittels Check-Boxen CB1,...,CB33 zur Verfügung stehen.

Dem Anwender oder Inbetriebsetzer wird nun über die Ausgabefelder A1,A2,A3 nicht nur mitgeteilt, welchen Performancegewinn er zu erwarten hat, sondern bei Anwahl der Temperatur T3 von 45° C werden ihm in einer weiteren Auswahl drei Check-Boxen CB31,CB32,CB33 zur Verfügung gestellt. Eine erste Check-Box CB31 kann angewählt werden für den Fall, dass "ein aktiver Prozessorkern eine Performance-Steigerung von 50%" bringen soll. Eine zweite Check-Box CB32 kann angewählt werden, wenn "zwei aktive Prozessorkerne eine Performance-Steigerung von 30% je Kern "bringen" sollen und eine dritte Check-Box CB33 kann angewählt werden, wenn "vier aktive Prozessorkerne, wobei vier Kerne mit normaler Performance betrieben werden sollen" gewünscht sind. Damit weist die Parametrieroberfläche 70 ein Konfigurationsmittel 72 auf, welches ausgestaltet ist, eine Konfiguration für die Anzahl der zu betreibenden Prozessorkerne bei einen Mehrkernprozessor einzustellen und zu speichern.

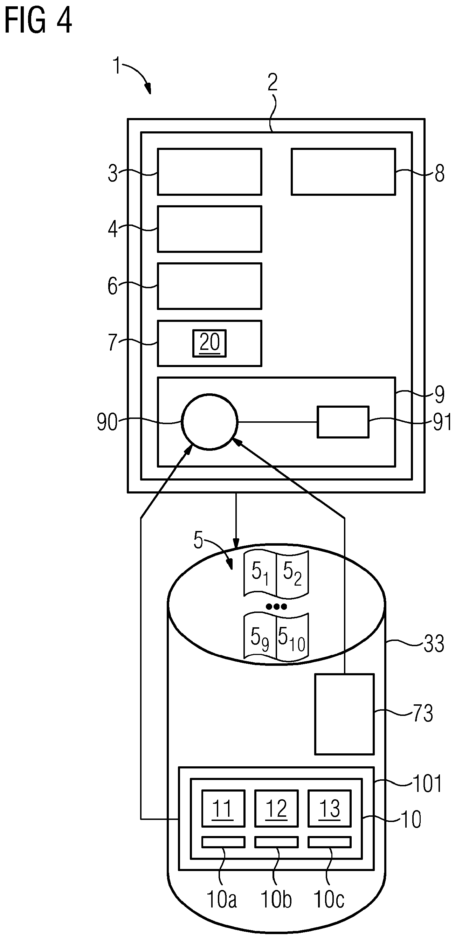

Gemäß FIG 4 ist das aus FIG 1 bekannte Konfigurationssystem 1 mit einer Erweiterung dargestellt. Die Erweiterung betrifft ein Optimierungsmittel 9, wobei das Optimierungsmittel 9 mit einer Optimierungsrechnung 90 arbeitet. Als Eingangsgröße für die Optimierungsrechnung 90 dient die Konfigurationsdatei aus dem Projekt 101 und Daten aus einer baugruppenspezifischen Entwärmungstabelle 73. Das Optimierungsmittel 9 ist ausgestaltet auf Basis des aktuell konfigurierten Umgebungstemperatur-Parameters 20 und einer hinterlegten Hardware-Baugruppen 11, 12, 13 spezifischen Entwärmungstabelle 73 bei einem Hochlauf des Automatisierungssystems 100 bzw. bei einer Änderung der Parametrierung automatisch eine Konfiguration bereitzustellen, welche die Anzahl der zu betreibenden Prozessorkerne bei einem Mehrkernprozessor vorgibt und bei welcher die Hardware-Baugruppen 11, 12, 13 bei dem aktuell angegebenen Umgebungstemperatur-Parameter 20 die bestmögliche Rechenleistung aufweisen und trotzdem sicher aufgrund der Umgebungsbedingungen am Einsatzort entwärmt werden.

Als optionelle Erweiterung und Erleichterung der Bedienbarkeit zeigt FIG 1 zusätzlich einen Webserver 80 mit welchen zusätzlich zur Projektiersoftware 2 der Anpassungsschritte durchgeführt werden kann. Der Webserver 80 ist über eine Datenleitung (gestrichelt) mit dem Feldbus verbunden. Auch ist es möglich den Anpassungsschritt mittels einer an das Automatisierungssystem 100 angeschlossenen Bedieneinheit 81 durchzuführen.

## Patentansprüche

1. Verfahren zum Konfigurieren von Hardware-Baugruppen (11, 12, 13) in einem Automatisierungssystem (100) mit den Schritten:
a) Öffnen oder Anlegen eines Projektes (101) in einer Projektiersoftware (2),
b) Öffnen oder Erzeugen, in diesem Projekt (101), einer Station (10) mit einer Anzahl von Steckplätzen (10a,10b,10c), wobei die für die Station (10) vorhandenen Steckplätze (10a,10b,10c) angezeigt werden,
c) Öffnen eines Hardware-Katalogs (5), der eine Vielzahl von Hardware-Baugruppen-Stammdaten-Sätze (5₁,...,5₁₀) umfasst,
d) Einfügen zumindest eines Hardware-Baugruppen-Stammdaten-Satzes (5₁,...,5₁₀) einer Hardware-Baugruppe (11,12,13) aus dem Hardware-Katalog (5) in die Station (10), wobei zumindest auf einem ersten Steckplatz (10a) eine erste Hardware-Baugruppe (11) eingefügt wird,
e) ein Anpassungsschritt für den zumindest einen Hardware-Baugruppen-Stammdaten-Satzes (5₁,...,5₁₀) durchgeführt wird, wobei zumindest ein Umgebungstemperatur-Parameter (20), welcher die Umgebungsbedingungen am Einsatzort der zumindest einen Hardware-Baugruppe (11,12,13) repräsentiert, spezifiziert wird,
f) Speichern der Station (10) mit dem in die Station eingefügten zumindest einen Hardware-Baugruppen-Stammdaten-Satz (5₁,...,5₁₀) und seinem zumindest einem Umgebungstemperatur-Parameter (20),
**dadurch gekennzeichnet, dass**
in dem Anpassungsschritt ein im Auslieferungszustand der Hardware-Baugruppe (11, 12, 13) festgelegter maximaler Temperaturwert für den Umgebungstemperatur-Parameter (20) zu kleineren Temperaturwerten (11,12,13) hin verändert wird, wobei auf Basis des aktuell konfigurierten Umgebungstemperatur-Parameters (20) und einer hinterlegten Hardware-Baugruppen (11, 12, 13) spezifischen Entwärmungstabelle (73) bei einem Hochlauf des Automatisierungssystem (100) bzw. bei einer Änderung der Parametrierung automatisch eine Konfiguration gewählt wird, welche die Anzahl der zu betreibenden Prozessorkerne bei einem Mehrkernprozessor vorgibt, wodurch die Hardware-Baugruppen (11, 12, 13) bei der für den aktuell angegebenen Umgebungstemperatur-Parameter die bestmögliche Rechenleistung aufweisen und trotzdem sicher aufgrund der Umgebungsbedingungen am Einsatzort entwärmt werden.

2. Verfahren nach Anspruch 1, wobei zusätzlich zu der Projektiersoftware (2) der Anpassungsschritt von einem Webserver (80) oder einer Bedieneinheit (81) direkt an den Hardware-Baugruppen (11, 12, 13) durchgeführt wird.

3. Konfigurationssytem (1) zum Konfigurieren von Hardware-Baugruppen (11, 12, 13) in einem Automatisierungssystem (100) mit einer Projektiersoftware (2) ausgestaltet mit einem Anlegemittel (3) zum Anlegen eines Projektes (101), einem Erzeugungsmittel (4) zum Erzeugen einer Station (10) mit einer Anzahl von Steckplätzen (10a,10b,10c),
einem Hardware-Katalog (5), der eine Vielzahl von Hardware-Baugruppen-Stammdaten-Sätzen (5₁,...,5₁₀) umfasst,
einem Einfügemittel (6) zum Einfügen zumindest eines Hardware-Baugruppen-Stammdaten-Satzes (5₁,...,5₁₀) einer Hardware-Baugruppe (11, 12, 13) aus dem Hardware-Katalog (5) in die Station (10), weiterhin mit einem
Anpassungsmittel (7) zum Anpassen der zumindest einen Hardware-Baugruppe (11,12,13), wobei das Anpassungsmittel (7) ausgestaltet ist zumindest einen Umgebungstemperatur-Parameter (20) anzupassen, welcher die Umgebungsbedingungen am Einsatzort der zumindest einen Hardware-Baugruppe (11) repräsentiert und
ein Speichermittel (8)zum Speichern der Station (10) mit den in die Station (10) eingefügten zumindest einen Hardware-Baugruppen-Stammdaten-Satz (5₁) und seinem zumindest einem angepassten Umgebungstemperatur-Parameter (20), wobei das Anpassungsmittel (7) eine Parametrieroberfläche (70) aufweist, welche ausgestaltet ist ein in einem Auslieferungszustand der Hardware-Baugruppe (11, 12, 13) festgelegten maximalen Temperaturwert anzuzeigen, wobei ein Eingabemittel (71) für den Umgebungstemperatur-Parameter (20) innerhalb der Parametrieroberfläche (70) ausgestaltet ist den Umgebungstemperatur-Parameter (20) zu kleineren Temperaturwerten (T1,T2,T3,T4) hin zu verändern, ein Überschreiten des maximalen Temperaturwertes jedoch verhindert,
**gekennzeichnet durch**
ein Optimierungsmittel (9), welches ausgestaltet ist auf Basis des aktuell konfigurierten Umgebungstemperatur-Parameters (20) und einer hinterlegten Hardware-Baugruppe (11, 12, 13) spezifischen Entwärmungstabelle (73) bei einem Hochlauf des Automatisierungssystems (100) bzw. bei einer Änderung der Parametrierung automatisch eine Konfiguration bereit zu stellen, welche die Anzahl der zu betreibenden Prozessorkerne bei einem Mehrkernprozessor vorgibt und bei welcher die Hardware-Baugruppen (11, 12, 13) bei dem aktuell angegebenen Umgebungstemperatur-Parameter (20) die bestmögliche Rechenleistung aufweisen und trotzdem sicher aufgrund der Umgebungsbedingungen am Einsatzort entwärmt werden.

## Claims

1. Method for configuring hardware modules (11,12,13) in an automation system (100), comprising the steps:
a) opening or creating a project (101) in a project configuration software package (2),
b) opening or generating, in said project (101), a station (10) having a number of slots (10a,10b,10c), wherein the slots (10a,10b,10c) available for the station (10) are displayed,
c) opening a hardware catalogue (5) which comprises a plurality of hardware module master data records (5₁,...,5₁₀),
d) inserting at least one hardware module master data record (5₁,...,5₁₀) for a hardware module (11,12,13) from the hardware catalogue (5) into the station (10), wherein a first hardware module (11) is inserted at least onto a first slot (10a),
e) a customization step is carried out for the at least one hardware module master data record (5₁,....5₁₀), wherein at least one environmental parameter (20) is specified which represents the ambient conditions at the deployment location of the at least one hardware module (11,12,13),
f) saving the station (10) having the at least one hardware module master data record (5₁,...,5₁₀) inserted into the station and its at least one environmental parameter (20),
**characterised in that**
a maximum temperature value for the ambient temperature parameter (20) defined in the as-delivered state of the hardware module (11,12,13) is changed in the direction of lower temperature values (11,12,13) in the customization step, wherein on the basis of the currently configured ambient temperature parameter (20) and a stored hardware-module (11,12,13) specific heat dissipation table (73) a configuration which gives the number of processor cores to be operated in the case of a multi-core processor is automatically chosen when the automation system (100) is started up or in the event of a change in the parameterization, as a result of which the hardware modules (11,12,13) offer the best possible computing power for the currently specified ambient temperature parameter and nevertheless are reliably cooled on account of the ambient conditions at the deployment location.

2. Method according to claim 1, wherein in addition to the project configuration software package (2) the customization step is carried out from a web server (80) or an operating panel (81) directly on the hardware modules (11,12,13).

3. Configuration system (1) for configuring hardware modules (11,12,13) in an automation system (100) designed using a project configuration software package (2) having a creation tool (3) for creating a project (101),
a generation tool (4) for generating a station (10) having a number of slots (10a, 10b, 10c),
a hardware catalogue (5) which comprises a plurality of hardware module master data records (5₁,...,5₁₀),
an insertion tool (6) for inserting at least one hardware module master data record (5₁,...,5₁₀) for a hardware module (11,12,13) from the hardware catalogue (5) into the station (10),
furthermore having
a customization tool (7) for customizing the at least one hardware module (11,12,13), wherein the customization tool (7) is designed in order to customize at least one environmental parameter (20) which represents the ambient conditions at the deployment location of the at least one hardware module (11) and
a storage tool (8) for saving the station (10) with the at least one hardware module master data record (5₁) inserted into the station (10) and its at least one customized environmental parameter (20), wherein the customization tool (7) has a parameterization interface (70) which is designed in order to display a maximum temperature value specified in an as-delivered state of the hardware module (11,12,13), wherein an input tool (71) for an ambient temperature parameter (20) is designed within the parameterization interface (70) in order to change the ambient temperature parameter (20) in the direction of lower temperature values (T1,T2,T3,T4), but prevents the maximum temperature value being exceeded, **characterised by**
an optimization tool (9) which is designed on the basis of the currently configured ambient temperature parameter (20) and a stored hardware-module (11,12,13) specific heat dissipation table (73) to automatically make available, when the automation system (100) is started up or in the event of a change in the parameterization, a configuration which gives the number of processor cores to be operated in the case of a multi-core processor and with which the hardware modules (11,12,13) offer the best possible computing power for the currently specified ambient temperature parameter (20) and nevertheless are reliably cooled on account of the ambient conditions at the deployment location.

## Revendications

1. Procédé de configuration de modules (11, 12, 13) matériels d'un système (100) d'automatisation comprenant les stades :
a) on ouvre ou on installe un projet (101) dans un logiciel (2) d'établissement de projet,
b) on ouvre ou on produit dans ce projet (101) un poste (10) ayant un certain nombre d'emplacements (10a, 10b, 10c) d'enfichage, dans lequel on indique les emplacements (10a, 10b, 10c) d'enfichage présents pour le poste (10),
c) on ouvre un catalogue (5) matériel, qui comprend une pluralité d'ensembles (5₁,..., 5₁₀) de données permanentes de modules matériels,
d) on insère au moins un ensemble (5₁,..., 5₁₀) de données permanentes de modules matériels d'un module (11, 12, 13) matériel du catalogue (5) matériel dans le poste (10), dans lequel on insère un premier module (11) matériel au moins sur un premier emplacement (10a) d'enfichage,
e) on effectue un stade d'adaptation du au moins un ensemble (5₁,..., 5₁₀) de données permanentes de modules matériels, dans lequel on spécifie au moins un paramètre (20) de température ambiante, qui représente les conditions ambiantes à l'emplacement d'utilisation du au moins un module (11, 12, 13) matériel,
f) on met en mémoire le poste (10) avec le au moins un ensemble (5₁,..., 5₁₀) de données permanentes de modules matériels inséré dans le poste et son paramètre (20) de température ambiante,
**caractérisé en ce que**
dans le stade d'adaptation, on modifie vers des valeurs (11, 12, 13) de température plus basses une valeur de température maximum, fixée dans l'état de livraison du module (11, 12, 13) matériel, du paramètre (20) de température ambiante, dans lequel, sur la base du paramètre (20) de température ambiante configuré en cours et d'une table (73) de dégagement de chaleur spécifique à des modules (11, 12, 13) matériels mis en mémoire, pour un démarrage du système (100) d'automatisation ou pour une modification du paramétrage on sélectionne automatiquement une configuration qui prescrit, pour un processeur à plusieurs noyaux, le nombre des noyaux de processeur à faire fonctionner, grâce à quoi, les modules (11, 12, 13) matériels ont pour le paramètre de température ambiant indiqué en cours, la puissance de calcul la meilleure possible et perdent cependant de la chaleur de manière sûre en raison des conditions ambiantes à l'emplacement d'utilisation.

2. Procédé suivant la revendication 1, dans lequel en plus du logiciel (2) d'établissement de projet, on effectue le stade d'adaptation par un serveur (80) toile ou par une unité (81) de service directement sur les modules (11, 12, 13) matériels.

3. Système (1) de configuration de module (11, 12, 13) matériel d'un système (100) d'automatisation comprenant un logiciel (2) d'établissement de projet conformé en ayant un moyen (3) d'établissement pour l'établissement d'un projet (101), un moyen (4) de production pour la production d'un poste (10) ayant un certain nombre d'emplacements (10a, 10b, 10C) d'enfichage, un catalogue (5) matériel, qui comprend une pluralité d'ensembles (5₁, ..., 5₁₀) de données permanentes de modules matériels, un moyen (6) d'insertion pour l'insertion d'au moins un ensemble (5₁, ..., 5₁₀) de données permanentes de modules matériels d'un module (11, 12, 13) matériel du catalogue (5) matériel dans le poste (10), comprenant en outre
un moyen (7) d'adaptation pour l'adaptation du au moins un module (11, 12, 13) matériel, dans lequel le moyen (7) d'adaptation est conformé pour adapter au moins un paramètre (20) de température ambiante, qui représente les conditions ambiantes à l'emplacement d'utilisation du au moins un module (11) matériel et
un moyen (8) de mise en mémoire pour mettre en mémoire le poste (10) avec le au moins un ensemble (5₁, ..., 5₁₀) de données permanentes de module inséré dans le poste (10) et son paramètre (20) de température ambiante adapté, le moyen (7) d'adaptation ayant une surface (70) de paramétrage, qui est conformée pour indiquer une valeur de température maximum fixée dans un état de livraison des modules (11, 12, 13) matériels, dans lequel un moyen (71) d'entrée du paramètre (20) de température ambiante dans la surface (70) de paramétrage est conformé pour modifier vers des valeurs (T1, T2, T3, T4) de température plus basses le paramètre (20) de température ambiant, tout en empêchant cependant un dépassement de la valeur maximum de température,
**caractérisé par**
un moyen (9) d'optimisation, qui est conformé pour, sur la base du paramètre (20) de température ambiante configuré en cours et d'une table (73) de dégagement de chaleur spécifique aux modules (11, 12, 13) matériels mis en mémoire, lors d'un démarrage du système (100) d'automatisation ou lors d'une modification du paramétrage, mettre à disposition automatiquement une configuration qui prescrit le nombre des noyaux de processeur à faire fonctionner pour un processeur à plusieurs noyaux et dans lequel les modules (11, 12, 13) matériels ont, pour le paramètre de température ambiant indiqué en cours, la puissance de calcul la meilleure possible et perdent cependant de la chaleur de manière sûre en raison des conditions ambiantes à l'emplacement d'utilisation.
